# EUROPEAN PATENT SPECIFICATION

(11) **EP 1 547 662 B1**
(45) Date of publication and mention of the grant of the patent: **30.08.2006**
(21) Application number: 04258012.6
(22) Date of filing: 21.12.2004
(51) Int. Cl.: B01D 45/12, B04C 9/00, G08B 17/00

(54) **Particle and moisture filter**
Partikel- und Feuchtefilter
Filtre à particules et à vapeur d'eau

(30) Priority: 22.12.2003 NO 20035754
(43) Date of publication of application: 29.06.2005
(73) Proprietor: Elotec AS, 7310 Oppdal (NO)
(72) Inventor: Kleven, Jan, 7340 Oppdal (NO); Solem, Tore, 7340 Oppdal (NO)
(74) Representative: Crawford, Andrew Birkby

(56) References cited:
- EP-A- 0 638 885
- DE-A1- 10 135 535
- US-A- 6 052 058
- PATENT ABSTRACTS OF JAPAN vol. 1997, no. 01, 31 January 1997 (1997-01-31) & JP 08 241475 A (NOHMI BOSAI LTD), 17 September 1996 (1996-09-17)

## Description

The present invention relates to a particle and moisture filter according to the preamble of claim 1. The filter will be used in fire detection systems with aspiration detectors, which makes particular demands for the filter.

### Background

A series of filters, for both filtering particles from air and filtering moisture from air, are known. Particles are here "dry" particles, such as dust, hair, feather, minor grains of sand and cereal dust. Moisture is condensed fluid from moist air. The filters can be based on different principles. Simple filters may comprise membranes which are stopping large particles, but letting air pass. The disadvantage with filters like this is that they, after a certain time of use, get clogged and thus not let the air pass with the same speed. Possibly, the membrane must be periodically cleaned or replaced. If the air contains moisture, this will also gather in the filter, which can cause growth of bacteria and mould.

Another known filter is based on a cyclone. Air is sucked into the cyclone to create rotation with high speed in a circular motion. Due to the centrifugal force, the particles in the air will be whirled towards the periphery of the cyclone and then, due to the gravity, fall to the bottom. The clean air can be sucked out in the upper part of the cyclone. The disadvantage of this filter is that, if the air has been exposed for temperature changes, there will be a risk that the air contains moisture in form of condensation. This will bring the particles to stick together and form a sticky substance. This necessitates periodic cleaning.

Fire detection systems, based on aspiration detectors, works by sucking air, from different areas in a house or in parts of a house, through narrow pipes to the detector. The detector analyse the air for indications of smoke. These systems are often used in farm buildings. A common feature for such buildings is inferior isolation in most of the rooms, so that both temperature and moisture level will vary with the outside conditions. In addition, the air may contain hair and feather from farm animals, dust from hay, and different gases due to processes of fermentation in silos and dung cellars. The disadvantages of existing filters will therefore have a particular unfavourable effect in such environments. Clogged filters in fire detection systems will result in increased delay time, for fire alert, which further reduces the security.

### Object

The main object of the present invention is to provide a particle and moisture filter which is suitable for fire detection systems. The filter has to be able to effectively filter both particles as dust, dirt, feather, hair etc., at the same time as moisture in form of condensed water from vapour is separated. The filtering has to be done without the filter being in danger of being clogged by sticky mixtures of particles and moisture.

### The invention

The present invention is described in the characterizing part of claim 1. Preferred embodiments appear from the dependent claims.

### Example

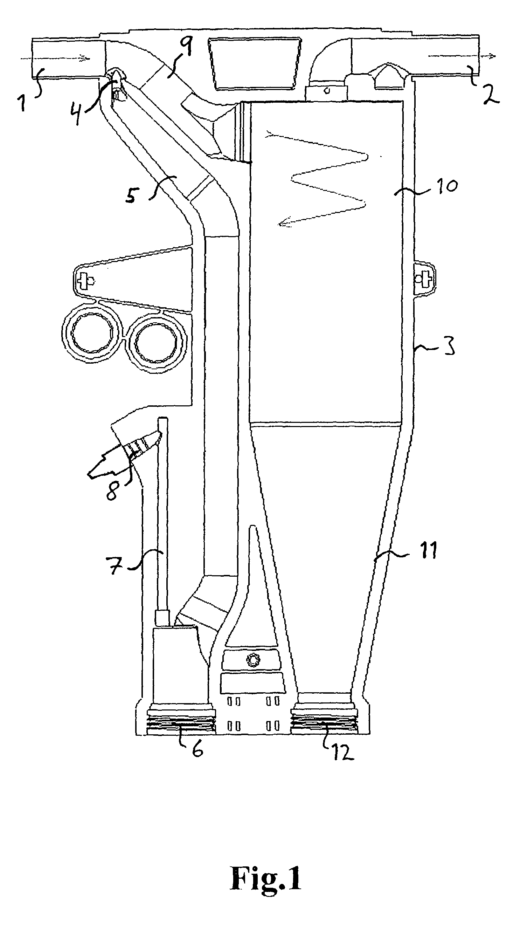

The present invention will now be described with reference to the attached Figure, which shows a schematical side view of a particle and moisture filter. Such a filter has been tested and proven effective for this utilisation.

The filter in the Figure includes an inlet 1 and an outlet and it is enclosed in a housing 3. The inlet 1 is connected to extended and perforated ducts, collecting air from different areas of the building, in which the fire detection system is installed. The outlet 2 is connected to the aspiration detector (not shown), where analysis of the air is performed, and where a fan unit (not shown) is arranged. It sucks in the air from the perforated pipes and to the inlet 1, through the filter and through the outlet 2 to the aspiration detector.

The filter includes a slot 4, arranged in the substantial lower part of the inlet 1. The slot 4 is connected to a substantially downward conduit 5. In the bottom of the downward conduit 5, a detachable condensate container (not shown) is arranged, which preferably is connected to the downward conduit by means of a threaded connection 6. Preferably, the downward conduit 5, at its lower end, is connected to a substantially upwards directed riser 7, having a check valve 8.

The filter includes a transport duct 9, leading from the inlet 1 and past the slot 4 and to a cyclone 10. The transport duct 9 has a curved shape, and it's designed with a substantial circular-shaped opening towards the inlet 1, and with a substantially rectangular-shaped opening towards the cyclone. The opening towards the cyclone 1 is directing the air stream generally tangential towards the cyclone, for providing a favourable air stream in the cyclone 10. The cyclone 10 is substantially vertical and cylindrical, and includes preferably a downwards directed tapered part 11. At the lower end of the cyclone 10, a threaded connector 12, for connection to a detachable particle container (not shown) is arranged. The outlet 2 is centrally connected at the upper end of the cyclone 10.

The mode of operation of the filter will be described in the following. The air from the perforated pipes contains both moisture and particles. Since the perforations in the pipes, has a size between 3mm and 9mm, the particles in the air may also have the same order of size, even though hair and feather also is entering. As the extended perforated pipes, are often arranged through different rooms with different temperatures, a part of the moisture in the air will condensate and gather as fluid at the bottom of the tube. When the air, together with the condensed moisture, reaches the inlet 1, the condensed moisture will flow down the downward conduit 5, through the slot 4 and gathered in the condensate container. The condensate container is preferably transparent, so that it will be easy to recognise when it should be emptied. If emptying, for some reason not is done, the fluid level would rise in the riser 7 and flow out through the check valve 8. The check valve 8 prevents "false" air from being sucked in and through the riser 7 and the aspiration detector.

The air containing particles wherefrom condensed moisture is removed, is sucked through the transport duct 9 and to the cyclone 10. The design of the transport duct 9 results in that the air in the cyclone is rotated inside the cyclone (indicated by an arrow in the cyclone). Here the particles will fall down and be gathered in the dust container, which has to be periodically emptied. The filtered air is sucked through the opening centrally at the top of the cyclone, and into the aspiration detector.

The size of the containers, will determine the need for periodical emptying. This will still be less frequently than prior art filters.

## Claims

1. Filter for filtering particles and moisture at aspiration detectors in fire detection systems, comprising an inlet (1) and an outlet (2), **characterized in that** the filter comprises
a moisture filtering unit, comprising a downward conduit (5), which at its upper end is connected to the inlet (1) via a slot (4), arranged in the lower part of the inlet (1), where the downward conduit (5) at its lower end is connected to a detachable condensate container for collecting condensed moisture; and
a particle filtering unit, comprising a transport duct (9), which at one end is connected to the inlet (1), after the slot (4), and at its other end is connected to a substantially cylinder-shaped and vertical cyclone (10), and the cyclone is at its lower end connected to a detachable particle container for collection of particles.

2. Filter according to claim 1, **characterized in that** the downward conduit (5) at its lower end is connected to a substantially upward directed riser (7), which at its upper end comprises a check valve (8).

3. Filter according to any of claims 1 or 2, **characterized in that** the cyclone (10) comprises a downward directed tapered part (11).

## Patentansprüche

1. Filter zum Filtern von Partikeln und Feuchtigkeit an Ansaugdetektoren in Feuermeldesystemen, umfassend einen Einlass (1) und einen Auslass (2), **dadurch gekennzeichnet, dass** das Filter Folgendes umfasst:
eine Feuchtigkeitsfiltereinheit, die eine Abwärtsleitung (5) umfasst, die an ihrem oberen Ende mit dem Einlass (1) über einen Schlitz (4) verbunden ist, der im unteren Teil des Einlasses (1) angeordnet ist, wobei die Abwärtsleitung (5) an ihrem unteren Ende mit einem abnehmbaren Kondensatbehälter zum Auffangen von kondensierter Feuchtigkeit verbunden ist; und
eine Partikelfiltereinheit, die ein Transportrohr (9) umfasst, das an einem Ende mit dem Einlass (1) hinter dem Schlitz (4) und an seinem anderen Ende mit einem im Wesentlichen zylinderförmigen und vertikalen Zyklon (10) verbunden ist und der Zyklon an seinem unteren Ende mit einem abnehmbaren Partikelbehälter zum Auffangen von Partikeln verbunden ist.

2. Filter nach Anspruch 1, **dadurch gekennzeichnet, dass** die Abwärtsleitung (5) an ihrem unteren Ende mit einem im Wesentlichen aufwärts gerichteten Steigrohr (7) verbunden ist, das an seinem oberen Ende ein Rückschlagventil (8) aufweist.

3. Filter nach Anspruch 1 oder 2, **dadurch gekennzeichnet, dass** der Zyklon (10) einen abwärts gerichteten konischen Teil (11) umfasst.

## Revendications

1. Filtre pour filtrer des particules et de l'humidité au niveau de détecteurs à aspiration pour systèmes de détection d'incendie, comprenant une entrée (1) et une sortie (2), **caractérisé en ce que** le filtre comprend
une unité de filtration d'humidité qui comprend un conduit orienté de haut en bas (5) dont la partie supérieure est connectée à l'entrée (1) par l'intermédiaire d'une fente (4) disposée dans la partie inférieure de l'entrée (1), et dont l'extrémité inférieure est connectée à un collecteur de condensat amovible qui recueille l'humidité condensée ; et
une unité de filtration de particules qui comprend une gaine de transport (9), dont l'une des extrémités est connectée à l'entrée (1), en aval de la fente (4), et dont l'autre extrémité est connectée à un cyclone (10) sensiblement cylindrique et vertical, cyclone dont l'extrémité inférieure est connectée à un collecteur de particules amovible, qui recueille les particules.

2. Filtre selon la revendication 1, **caractérisé en ce que** l'extrémité inférieure du conduit orienté de haut en bas (5) est raccordée à un tuyau montant (7) sensiblement orienté de bas en haut et dont l'extrémité supérieure est pourvue d'un clapet antiretour (8).

3. Filtre selon l'une quelconque des revendications 1 ou 2, **caractérisé en ce que** le cyclone (10) comprend une partie conique (11) orientée de haut en bas.
